# EUROPEAN PATENT APPLICATION

(11) **EP 1 991 036 A1**
(43) Date of publication of application: **12.11.2008**
(21) Application number: 07107943.8
(22) Date of filing: 10.05.2007
(51) Int. Cl.: H05B 41/292

(54) **Method of and circuit for driving a discharge lamp**

(71) Applicant: FLOWIL INTERNATIONAL LIGHTING (HOLDING) B.V., 1097 JB Amsterdam (NL)
(72) Inventor: Vanbrabant, Bart, Dr., 3370 Roosbeek (BE); Geens, Rudy, Dr., 3550 Heusden-Zolder (BE); Derhaeg, Lode, Dr., 3290 Diest (BE)
(74) Representative: Zech, Stefan Markus

(57) **Abstract**

A method of driving a discharge lamp (1) to avoid acoustic resonance comprises regulating the current flow through the lamp (1) by a ballast (2) in order that the output frequency of the ballast (2) is changed when the lamp (1) is detected to have entered an acoustic resonance mode. To this end the light output by the lamp (1) is monitored, for example by a sensor (4). This light is analyze to determine if the lamp (1) has entered an acoustic resonance mode and operation of the ballast (2) is controlled accordingly to change the current flow through the lamp (1). Preferably, the light frequency spectrum of the lamp (1) is monitored across the whole of the visible light spectrum to detect a fall in light intensity at any particular frequency in order that the output frequency of the ballast (2) is changed so that the lamp (1) is driven at a different frequency.

## Description

The present invention relates to a method of driving a discharge lamp and to a circuit for use in such a method.

Electrical discharge lamps are negative resistance devices and therefore always require a ballast to regulate the flow of current through the lamp. A magnetic ballast is commonly used for this purpose. Such ballasts comprise an inductor which limits the power available to the lamp with only minimal power losses to itself. However, discharge lamps which operate directly from mains frequency AC will flicker at twice the mains frequency, since the power being delivered to the lamp drops to zero twice per cycle. The same principle can also cause a magnetic ballast to produce hum. For these reasons, electronic ballasts now tend to be used. An electronic ballast uses solid state electronic circuitry to provide the proper starting and operating electrical conditions to power the lamp. There are different technologies available for driving the lamp. Typically, low frequency and high frequency ballasts can be identified. For driving HID lamps, a typical low frequency would be between 50 and 400 Hz; a typical high frequency would be between 30 and 300 kHz. The most common electronic ballasts give a square wave output signal to the lamp. The cost and size of an electronic ballast can be reduced dramatically by using a high frequency wave shape. However, discharge lamps, particularly high-pressure discharge lamps such as mercury high pressure lamps and sodium vapor lamps, may suffer from unstable discharge arcs owing to acoustic resonance when operated at certain high frequencies. Acoustic resonance therefore causes an unstable light output and ultimately may result in permanent damage to the lamp.

There are several possible known solutions to the problem of such acoustic resonance but they all have disadvantages. These include:
1. Frequency hopping, which involves changing the frequency in accordance with a predetermined pattern. However, this involves a fixed algorithm that has to cover all possible situations that may arise over the lifetime of the lamp.
2. Electric ripple detection in which high frequency changes in the lamps' impedance are monitored. However, this has the disadvantage that it is difficult to carry out very high frequency impedance measurements.
3. Current modulation in which the instantaneous amplitude of the current is changed. However, this has the disadvantage that higher peak levels of lamp current occur.
4. Frequencies over 150 kHz should according to US 5 828 185 reduce acoustic resonances; however, in such high frequency ranges EMC-problems may arise.

The object of the present invention is to provide a method of operating a discharge lamp which substantially eliminates the problem of acoustic resonance and which substantially overcomes the above disadvantages of known apparatus.

According to a first aspect of the present invention there is provided a method of operating a discharge lamp comprising
regulating the current flow through the lamp by a ballast;
monitoring the light output by the lamp;
analyzing the light output by the lamp and determining if the lamp has entered an acoustic resonance mode; and
controlling operation of the ballast such that its output frequency is changed when the lamp is detected to have entered an acoustic resonance mode.

The advantage of such a method is that a feedback loop is set up that is based on actual, real-time measurements of the performance of the lamp. This means that all situations can be covered over the entire lifetime of the lamp, unlike conventional frequency hopping methods. Also, unless the lamp enters an acoustic resonance mode, frequency changes are unnecessary as the ballast only changes its output frequency when acoustic resonance is detected. This improves the cost and reliability of the system.

Preferably, the light frequency spectrum of the lamp is monitored across preferably the whole of the visible light spectrum. Variations in the light spectrum emitted by the lamp indicate if the lamp is in an acoustic resonance mode. In particular, unstable light output results when acoustic resonance occurs. This means, that acoustic resonances can be monitored by changes in the spectral distribution of the light. Hence, by monitoring the whole of the visible light spectrum all acoustic resonances occurring in the lamp can be detected.

Preferably also, the luminous intensity of the light emitted by the lamp is monitored and the ballast used to control the output wattage of the lamp. Hence, by monitoring the ambient light levels, the ballast can be controlled so that the luminous intensity of the light emitted by the lamp is varied to provide the degree of lighting required. In particular, the luminous intensity of the light emitted by the lamp can be controlled in inverse relationship to that of the ambient light. For example, on bright, sunny days, the luminous intensity of light emitted by the lamp can be reduced and *vice versa.* The invention can therefore lead to significant energy saving.

According to a second aspect of the present invention there is provided a discharge lamp driving circuit comprising
a ballast for regulating the current flow through the lamp;
a light sensor monitoring the light output by the lamp and adapted to produce a signal indicative of the light output by the lamp;
control means that receives the signal output by the light sensor and that is adapted to determine from the signal if the lamp has entered an acoustic resonance mode and to control operation of the ballast such that an output frequency of the ballast is changed when the lamp is detected to have entered an acoustic resonance mode.

Preferably, the light sensor monitors the light frequency spectrum of the lamp and preferably has a bandwidth that covers the whole of the visible light spectrum. The control means is therefore preferably adapted to detect a signal from the sensor indicative of a fall in light intensity at any particular frequency and to change the output frequency of the ballast such that the lamp is driven at a frequency different from said particular frequency.

Preferably also, the ballast comprises an electronic ballast that drives the lamp using a high frequency current.

Typical discharge lamps for which the present invention may be useful can be HPS (high pressure sodium lamps) and metal halide lamps in PCA or Quartz.

For the method of driving a discharge lamp, smart ballast devices can be used, which are provided with a processor to set the optimum output frequency. During ignition (starting routine) a frequency of 50 kHz may be set and then augmented in steps of 5 kHz until the step of analyzing the light output by the lamp leads to the result that the lamp is not operating in an acoustic resonance mode.

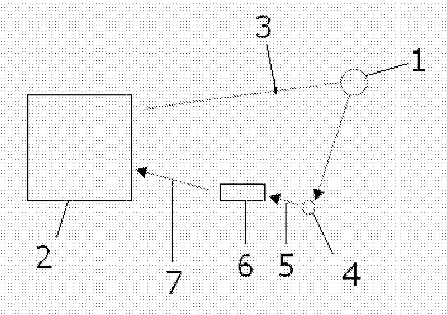

The attached drawing is a schematic representation of an embodiment of the present invention.

A discharge lamp 1 such as a high pressure gaseous discharge lamp is driven by a ballast 2 via a high frequency current 3. The use of a high frequency ballast 2 reduces hum and visible flickering. A broadband light sensor 4 is located in a position close to the lamp 1 in order that the light frequency spectrum of the lamp 1 can be monitored. The sensor 4 is adapted to produce a signal 5 indicative of the light output by the lamp 1. This signal 5 is output by the sensor 4 to a controller 6 which controls operation of the ballast 2 via a signal 7. A change in the spectral distribution is indicative of acoustic resonance occurring at that ballast output frequency. The controller 6 is therefore adapted to detect signals 5 from the sensor 4 indicative of a change in light intensity at any particular frequency. The controller 6 then controls operation of the ballast 2 by outputting a signal 7 that changes the output frequency of the ballast 2 such that the lamp is driven at a frequency different from those frequencies where acoustic resonance is detected. A feedback loop is therefore set up that is based on actual, real-time measurements of the performance of the lamp.

In the Figure, mainly for illustration purposes controller 6 and sensor 4 are each separated from the discharge lamp 1. In an actual embodiment controller 6 and/or sensor 4 can be a separated part outside the lamp device. However, in a preferred embodiment the controller 6 and /or the sensor 4 are integrated in the lamp device, in particular in the ballast 2 of the lamp device.

In addition to the detection of acoustic resonance, the apparatus can be used to control the power output of the lamp 1 by appropriate use of the ballast 2. By monitoring the ambient light levels using the sensor 4, the ballast 2 can be controlled by the controller 6 to vary the power output by the lamp 1 to provide the degree of lighting required and to suit environmental conditions.

Such an arrangement is suitable for use in a lighting installation for a commercial greenhouse. In these greenhouses high power discharge lamps are used to give crops growing in the greenhouse additional light. Hence, on bright sunny days, the power output of the lamps can be reduced as the crops will receive most of the light they require directly from the sun. However, on gloomy days the power output of the lamps can be increased to compensate for the weather conditions. Hence, by monitoring the ambient conditions and controlling the lamps accordingly, considerable energy savings can be made.

## Claims

1. A method of driving a discharge lamp (1) to avoid acoustic resonance comprises
regulating the current flow through the lamp by a ballast (2) ;
monitoring the light output by the lamp (1);
analyzing the light output by the lamp (1) and determining if the lamp (1) has entered an acoustic resonance mode; and
controlling operation of the ballast (2) such that its output frequency is changed when the lamp is detected to have entered an acoustic resonance mode.

2. A method as claimed in Clam 1, **characterized in that** the light frequency spectrum of the lamp (1) is monitored.

3. A method as claimed in Claim 1 or Claim 2, **characterized in that** the light frequency spectrum of the lamp (1) is monitored across the whole of the visible light spectrum.

4. A method as claimed in Claims 1 to 3, **characterized in that** during ignition (starting routine) of the lamp a first output frequency is set and that the output frequency is changed in specific steps of e. g. 5 kHz when the lamp is detected to operate in an acoustic resonance mode.

5. A method as claimed in any of Claims 1 to 4, **characterized in that** the luminous intensity of the light emitted by the lamp (1) is monitored and the ballast (2) is used to control the output wattage of the lamp (1).

6. A method as claimed in Claim 5, **characterized in that** ambient light levels are monitored and the ballast (2) used to control the luminous intensity of the lamp (1) in inverse relationship to said ambient light levels.

7. A discharge lamp driving circuit comprising
a ballast (2) for regulating the current flow through the lamp (1);
a light sensor (4) monitoring the light output by the lamp (1) and adapted to produce a signal (5) indicative of the light output by the lamp (1);
control means (6) that receives the signal (5) output by the light sensor (4) and that is adapted to determine from the signal (5) if the lamp (1) has entered an acoustic resonance mode and to control operation of the ballast (2) such that an output frequency of the ballast (2) is changed when the lamp (1) is detected to have entered an acoustic resonance mode.

8. A circuit as claimed in Claim 7, **characterized in that** the light sensor (4) monitors the light frequency spectrum of the lamp (1).

9. A circuit as claimed in Claim 7 or Claim 8, **characterized in that** the light sensor (4) has a bandwidth that covers the whole of the visible light spectrum.

10. A circuit as claimed in any of Claims 7 to 9, **characterized in that** the control means (6) is adapted to detect a signal from the sensor (4) indicative of a fall in light intensity at any particular frequency and to change the output frequency of the ballast (2) such that the lamp (1) is driven at a frequency different from said particular frequency.

11. A circuit as claimed in any of Claims 7 to 10, **characterised in that** the ballast (2) comprises an electronic ballast that drives the lamp (1) using a high frequency current.

12. A circuit as claimed in any of Claims 7 to 11, **characterized in that** the control means (6) is adapted to set a first output frequency during ignition (starting routine) and that the output frequency is augmented in steps of e. g. 5 kHz when the lamp is detected to operate in an acoustic resonance mode.
